# FASCICULE DE BREVET EUROPEEN

(11) **EP 4 380 248 B1**
(45) Date de publication et mention de la délivrance du brevet: **15.10.2025**
(21) Numéro de dépôt: 23213196.1
(22) Date de dépôt: 30.11.2023
(51) Int. Cl.: H04W 52/14, H04W 52/24, H04W 52/28, H04W 52/02, G01S 7/02, H04B 1/10, H04B 1/401, H04K 3/00, H04W 16/14

(54) **PROCÉDÉS DE CHANGEMENT DE MODE DE FONCTIONNEMENT D'UN DISPOSITIF DE COMMUNICATION SANS FIL ET DISPOSITIFS ASSOCIÉS**
VERFAHREN ZUM ÄNDERN DES BETRIEBSMODUS EINER DRAHTLOSKOMMUNIKATIONSVORRICHTUNG UND ZUGEHÖRIGE VORRICHTUNGEN
METHODS FOR CHANGING OPERATING MODE OF A WIRELESS COMMUNICATION DEVICE AND DEVICES THEREOF

(30) Priorité: 02.12.2022 FR 2212671
(43) Date de publication de la demande: 05.06.2024
(73) Titulaire: Sagemcom Broadband SAS, 92270 Bois-Colombes (FR)
(72) Inventeur: PARISOT, Clément, 92270 Bois-Colombes (FR); JARDIN, Arthur, 92270 Bois-Colombes (FR)
(74) Mandataire: Novagraaf Technologies

(56) Documents cités:
- US-A1- 2011 096 729
- "ETSI TR xxx yyy V1.1.1 (2007-10) Broadband Radio Access Networks (BRAN); 5 GHz high performance RLAN; Guide to the implementation of Dynamic Frequency Selection (DFS)", vol. 802.11 ETSI BRAN, 3 February 2009 (2009-02-03), pages 1 - 25, XP068135052, Retrieved from the Internet <URL:www.ieee802.org/11/private/ETSI_documents/BRAN.bak/Docfile/BRAN29-58/BRAN57/BRAN57d038r1 - Draft Technical Report - Guide to the implementation of DFS.doc> [retrieved on 20090203]
- "3rd Generation Partnership Project; Technical Specification Group Radio Access Network; Study on NR-based Access to Unlicensed Spectrum; (Release 16)", 21 February 2019 (2019-02-21), XP051599176, Retrieved from the Internet <URL:http://www.3gpp.org/ftp/tsg%5Fran/WG1%5FRL1/TSGR1%5F95/Docs/R1%2D1814408%2Ezip> [retrieved on 20190221]

## Description

### Domaine technique

Sont décrits des procédés de changement de mode de fonctionnement d'un dispositif de communication sans fil et des dispositifs associé. Les procédés et les dispositifs peuvent avantageusement être employés dans le cadre d'une contrainte liée à la détection de présence de radars sur un canal.

### Arrière-plan technique

Dans un réseau de communication sans fil, l'utilisation de certains canaux ou bandes de fréquence peut nécessiter le respect de contraintes techniques et règlementaires, notamment par rapport à des interférences possibles avec d'autres dispositifs sur les mêmes canaux. Par exemple, il peut être imposé qu'un dispositif de réseau de communication sans fil pratique une surveillance de la présence de signaux radar sur au moins une partie des canaux sur lesquels le dispositif peut être amené à opérer. Cette surveillance impose à son tour des exigences sur le fonctionnement du dispositif, notamment concernant les possibilités de mise en veille de certains modules ou fonctions, et peut être difficile à concilier avec le cahier des charges du dispositif ou même avec d'autres règlementations en matière d'économie d'énergie.

Les documents suivants sont relatifs au domaine technique :
(a) ETSI TR xxx yyy V1.1.1 (2007-10) Broadband Radio Access Networks (BRAN); 5 GHz high performance RLAN; Guide to the implementation of Dynamic Frequency Selection (DFS), IEEE Draft; BRAN57d038r1, Vol:802.11 ETSI BRAN, XP068135052 ;
(b) 3rd Generation Partnership Project; Technical Specification Group Radio Access Network; Study on NR-based Access to Unlicensed Spectrum; (Release 16); 3GPP Draft; Proposed TR38.889-110_rm, XP051599176;
(c) US2011096729 A1.

### Résumé

Un ou plusieurs modes de réalisation concernent un procédé mis en œuvre par un dispositif de communication sans fil comprenant une interface de communication sans fil, ladite interface étant configurée pour fonctionner sélectivement selon plusieurs modes de fonctionnement comprenant
- un premier mode de fonctionnement actif; et
- un second mode de fonctionnement à consommation réduite par rapport au premier mode et permettant la réception d'au moins un type de paquet de transmission;

le dispositif étant soumis à une contrainte de mise en œuvre d'une action devant être effectuée en continu lorsque l'interface fonctionne à une puissance d'émission supérieure à un seuil sur un canal de communication d'un type donné, l'action étant incompatible avec le second mode ;
le procédé comprenant, pour un changement du premier mode vers le second mode,
   a) dans un premier temps, l'abaissement de la puissance d'émission en dessous du seuil ;
   b) dans un second temps, la désactivation de l'action ;
   c) dans un troisième temps, l'activation du second mode.

Selon un ou plusieurs modes de réalisation, le second mode comporte de façon alternée des phases de veille et des phases actives, l'interface étant adaptée à pouvoir recevoir au moins un paquet de réveil pendant les phases de veille actives du second mode de fonctionnement.

Selon un ou plusieurs modes de réalisation, le procédé comprend le stockage du niveau de puissance avant son abaissement.

Selon un ou plusieurs modes de réalisation, l'action est une détection de la présence de radars sur le canal de type donné.

Selon un ou plusieurs modes de réalisation, le procédé comprend, avant les étapes (a) à (c), une vérification que l'action est bien effectuée, les étapes (a) et (b) n'étant effectuées que si cette vérification est positive.

Selon un ou plusieurs modes de réalisation, le procédé comprend, en cas de vérification positive, le stockage d'une information indicative du fait que l'action était bien effectuée.

Selon un ou plusieurs modes de réalisation, le canal de type donné est un canal à sélection dynamique de fréquence.

Selon un ou plusieurs modes de réalisation, le procédé comprend, avant l'abaissement de la puissance, la transmission d'un message à un point d'accès auquel le dispositif de communication sans fil est associé, ledit message indiquant le niveau de puissance visé après abaissement.

Selon un ou plusieurs modes de réalisation, le message comprenant en outre une donnée indicative de la raison de l'abaissement de la puissance.

Un ou plusieurs modes de réalisation concernent un dispositif de communication sans fil comprenant une interface de communication sans fil, ladite interface étant configurée pour fonctionner sélectivement selon plusieurs modes de fonctionnement comprenant
- un premier mode de fonctionnement actif; et
- un second mode de fonctionnement à consommation réduite par rapport au premier mode et permettant la réception d'au moins un type de paquet de transmission;

le dispositif étant soumis à une contrainte de mise en œuvre d'une action devant être effectuée en continu lorsque l'interface fonctionne à une puissance d'émission supérieure à un seuil sur un canal de communication d'un type donné, l'action étant incompatible avec le second mode ;
le dispositif comprenant pour un changement du premier mode vers le second mode :
   a) des moyens pour, dans un premier temps, abaisser la puissance d'émission en dessous du seuil ;
   b) des moyens pour, dans un second temps, désactiver l'action ;
   c) des moyens pour, dans un troisième temps, activer le second mode.

Selon un ou plusieurs modes de réalisation, le dispositif ci-dessus comprend en outre des moyens pour mettre en œuvre l'un des procédés décrits.

Un ou plusieurs modes de réalisation concernent un procédé mis en œuvre par un dispositif de communication sans fil comprenant une interface de communication sans fil,
ladite interface étant configurée pour fonctionner sélectivement selon plusieurs modes de fonctionnement comprenant
   - un premier mode de fonctionnement actif; et
   - un second mode de fonctionnement à consommation réduite par rapport au premier mode et permettant la réception d'au moins un type de paquet de transmission;
le dispositif étant soumis à une contrainte de mise en œuvre d'une action devant être effectuée en continu lorsque l'interface fonctionne à une puissance d'émission supérieure à un seuil sur un canal de communication d'un type donné, l'action étant incompatible avec le second mode ;
le procédé comprenant, pour un changement du second mode vers le premier mode,
   (a) dans un premier temps, l'activation du premier mode ;
   (b) dans un second temps, l'activation de l'action ;
   (c) dans un troisième temps, l'augmentation de la puissance d'émission au-dessus du seuil.

Selon un ou plusieurs modes de réalisation, le procédé comprend, avant l'augmentation de la puissance, la transmission d'un message à un point d'accès auquel le dispositif de communication sans fil est associé, ledit message indiquant le niveau de puissance visé après augmentation.

Selon un ou plusieurs modes de réalisation, le message comprenant en outre une donnée indicative de la raison de l'augmentation de la puissance.

Un ou plusieurs modes de réalisation concernent un dispositif de communication sans fil comprenant une interface de communication sans fil, ladite interface étant configurée pour fonctionner sélectivement selon plusieurs modes de fonctionnement comprenant
- un premier mode de fonctionnement actif; et

un second mode de fonctionnement à consommation réduite par rapport au premier mode et permettant la réception d'au moins un type de paquet de transmission;
le dispositif étant soumis à une contrainte de mise en œuvre d'une action devant être effectuée en continu lorsque l'interface fonctionne à une puissance d'émission supérieure à un seuil sur un canal de communication d'un type donné, l'action étant incompatible avec le second mode ;
le dispositif comprenant pour un changement du second mode vers le premier mode :
   (a) des moyens pour, dans un premier temps, activer premier mode ;
   (b) des moyens pour, dans un second temps, activer l'action ;
   (c) des moyens pour, dans un troisième temps, augmenter la puissance d'émission au-dessus du seuil.

Selon un ou plusieurs modes de réalisation, le dispositif ci-dessus comprend en outre des moyens pour mettre en œuvre l'un des procédés décrits.

Un ou plusieurs modes de réalisation concernent un support d'enregistrement lisible par un dispositif muni d'un processeur, ledit support comprenant des instructions qui, lorsque le programme est exécuté par un processeur d'un dispositif, conduisent le dispositif à mettre en œuvre au moins un des procédés décrits.

Un ou plusieurs modes de réalisation concernent un dispositif de communication sans fil comprenant un processeur, une mémoire et du code, le processeur étant configuré lorsqu'il exécute le code, à conduire le dispositif à mettre en œuvre au moins un des procédés décrits.

### Brève description des figures

D'autres caractéristiques et avantages apparaitront au cours de la lecture de la description détaillée qui va suivre pour la compréhension de laquelle on se reportera aux dessins annexés parmi lesquels :
- la figure 1 est un diagramme bloc d'un système comprenant un point d'accès d'un réseau sans fil et une station sans fil selon un exemple de réalisation non limitatif;
- la figure 2 est un diagramme schématique illustrant plusieurs contraintes à respecter selon un ou plusieurs exemples de réalisation ;
- la figure 3 est un diagramme schématique illustrant des états d'un dispositif sans fil selon un ou plusieurs exemples de réalisation ;
- la figure 4 est un organigramme d'un procédé de mise en mode basse consommation selon un exemple de réalisation non limitatif ;
- la figure 5 est un organigramme d'un procédé de sortie de mode basse consommation selon un exemple de réalisation non limitatif.

### Description détaillée

Dans la description qui va suivre, des éléments identiques, similaires ou analogues seront désignés par les mêmes chiffres de référence.

Les diagrammes blocs, algorigrammes et diagrammes de séquence de messages dans les figures illustrent l'architecture, les fonctionnalités et le fonctionnement de systèmes, dispositifs, procédés et produits programmes d'ordinateur selon un ou plusieurs exemples de réalisation. Chaque bloc d'un diagramme bloc ou chaque phase d'un algorigramme peut représenter un module ou encore une portion de code logiciel comprenant des instructions pour l'implémentation d'une ou plusieurs fonctions. Selon certaines implémentations, l'ordre des blocs ou des phases peut être changé, ou encore les fonctions correspondantes peuvent être mises en œuvre en parallèle. Les blocs ou phases de procédé peuvent être implémentés à l'aide de circuits, de logiciels ou d'une combinaison de circuits et de logiciels, et ce de façon centralisée, ou de façon distribuée, pour tout ou partie des blocs ou phases. Les systèmes, dispositifs, procédés et méthodes décrits peuvent être modifiés, faire l'objet d'ajouts et/ou de suppressions tout en restant dans le cadre de la présente description. Par exemple, les composants d'un dispositif ou d'un système peuvent être intégrés ou séparés. Également, les fonctions décrites peuvent être mises en œuvre à l'aide de plus ou de moins de composants ou de phases, ou encore avec d'autres composants ou à travers d'autres phases. Tout système de traitement de données adapté peut être utilisé pour l'implémentation. Un système ou dispositif de traitement de données adapté comprend par exemple une combinaison de code logiciel et de circuits, tels un processeur, contrôleur ou autre circuit adapté pour exécuter le code logiciel. Lorsque le code logiciel est exécuté, le processeur ou contrôleur conduit le système ou dispositif à mettre en œuvre tout ou partie des fonctionnalités des blocs et/ou des phases des procédés ou méthodes selon les exemples de réalisation. Par exemple, le processeur ou contrôleur peut mettre en œuvre tout ou partie d'un procédé, et dans ce cadre également communiquer avec d'autres composantes pour les contrôler et/ou leur transmettre des données et/ou recevoir des données, pour la mise en œuvre du procédé. Le processeur ou contrôleur conduit donc, seul ou en conjonction avec d'autres composants d'un dispositif auquel il est intégré, à mettre en œuvre les étapes d'un procédé. Le code logiciel peut être stocké dans une mémoire ou un support lisible accessible directement ou à travers un autre module par le processeur ou contrôleur.

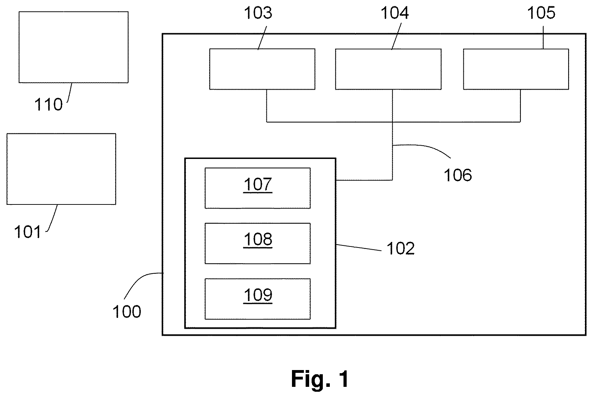

La figure 1 est un diagramme bloc d'un réseau de communication comprenant un dispositif client 100 d'un réseau sans fil et un dispositif point d'accès 101 à ce réseau, selon un ou plusieurs modes de réalisation. Les dispositifs 100 et 101 sont aptes à communiquer à travers le réseau de façon bidirectionnelle. Le dispositif client 100 comporte une interface de communication sans fil 102, un processeur 103, une mémoire vive 104 et une mémoire persistante 105. Les différentes composantes du dispositif 100 sont reliées par un bus de communication 106. La mémoire persistante comporte du code exécutable par le processeur 103, et notamment un logiciel pilote de l'interface sans fil. Le processeur 103 commande les modes de fonctionnement de l'interface de communication sans fil parmi les différents modes disponibles détaillés plus loin, et active ou désactive certaines fonctionnalités. L'interface de communication sans fil 102 comporte un contrôleur et un ensemble de composants assurant la fonctionnalité de communication sans fil. L'interface de communication sans fil répond par exemple à la norme IEEE 802.11.

L'interface 102 est illustrée comme comportant trois fonctionnalités. Une première fonctionnalité est la détection radar 107. Cette fonctionnalité peut être activée ou désactivée. Une seconde fonctionnalité est le contrôle 108 de la puissance à l'émission. Cette fonctionnalité permet de régler la puissance à un niveau souhaité. Une troisième fonctionnalité est le réglage du mode de fonctionnement 109 de l'interface 102. Ces modes peuvent comporter un mode actif dans lequel l'interface fonctionne de façon nominale, un mode éteint dans lequel l'interface n'est pas alimentée, et un mode de consommation réduite ou 'basse consommation', avec une 'veille intermittente', alternant phases actives et phases de veille. Les différentes fonctionnalités sont implémentées par l'intermédiaire d'un micrologiciel exécuté par le contrôleur de l'interface sans fil et, de façon générale, contrôlées par le processeur 103 par l'intermédiaire du logiciel pilote.

Dans ce qui suit, on supposera que le dispositif client 100 est associé au point d'accès 101.

La figure 1 montre également une source radar 110.

Selon un exemple de réalisation, pendant un mode veille du dispositif client :
- le processeur 103 est éteint ;
- la mémoire vive stocke certaines données de fonctionnement du dispositif 100 et les maintient pendant que le dispositif 100 est en mode veille;
- l'interface de communication sans fil 102 est dans le mode basse consommation.

L'interface 102 et/ou le dispositif 100 sont soumis à plusieurs contraintes de fonctionnement. Ces contraintes peuvent provenir de sources variées. Certaines de ces contraintes peuvent être définies par une ou plusieurs spécifications ou normes auxquelles le dispositif doit se conformer. D'autres contraintes peuvent être liées à des critères de certification que le dispositif cherche à respecter. Toujours d'autres contraintes peuvent être dérivées de choix techniques ou commerciaux propres, être imposées par des clients ou des partenaires, ou encore être dues à une exigence règlementaire. D'autres sources de contraintes peuvent exister.

Selon un mode de réalisation, les contraintes sont les suivantes :
C1 - au-delà d'un seuil S1 de puissance d'émission sans fil, le dispositif 100 doit mettre en œuvre au moins une action exigeant que l'interface de communication sans fil soit active en continu ;
C2 - un mode 'basse consommation' est nécessaire, ce mode comportant une mise en veille de l'interface de communication sans fil de manière intermittente;
C3 - lors du mode veille du dispositif client 100, la capacité de recevoir au moins certains types de paquets de données doit être maintenue (mode dit de 'veille connectée' du dispositif client 100, dans lequel l'interface de communication sans fil fonctionne, quand cette dernière est hors veille, au minimum avec des performances dégradées par rapport au mode de fonctionnement normal mais permettant de recevoir ces types de paquets;
C4 - lorsque le dispositif 100 est en mode veille, un seuil S2 maximal de consommation d'énergie par le dispositif 100 doit être respecté.

Un exemple de la contrainte C1 est l'exigence de mettre en œuvre une détection de radar au-delà du seuil de puissance S1. Cette exigence peut être limitée à un ou plusieurs canaux ou non. La norme européenne ETSI EN 301 893 V2.1.1 par exemple impose, pour des dispositifs client de réseaux locaux sans fil fonctionnant sur des bandes de fréquences 5 GHz et pour un seuil de puissance supérieur ou égal à 23dBm pour la puissance apparente rayonnée, que le dispositif client soit capable de détecter les radars présents dans l'environnement. Cette exigence concerne les canaux dits 'DFS' (acronyme, en langue anglaise, de '**S**élection de **D**ynamique de **F**réquence') décrits par exemple dans la norme IEEE 802.11h. Cette capacité de détection est mesurée en certification et doit atteindre un taux de réussite élevé. Pour l'obtenir, l'interface de communication sans fil 102 doit rester en écoute sur le canal radio de façon continue. Un exemple de l'action à mettre en œuvre mentionnée plus haut est donc la mise en œuvre d'une détection de radars.

Un exemple de la contrainte C2 est le mode basse consommation (désigné par l'acronyme « WMM-PS » de la certification « Wi-Fi Alliance ») comportant une mise en veille périodique de l'interface sans fil. Lors de ces phases de veille périodiques, l'interface sans fil 102 n'est cependant plus en mode d'écoute permanente pour la détection de radar. Le mode « basse consommation » est donc incompatible avec la contrainte C1, mais peut être nécessaire pour respecter un seuil de puissance maximal en mode veille du dispositif client 100 (contrainte C4) lorsqu'il est exigé un fonctionnement, même partiel, de l'interface sans fil pendant la veille du dispositif client 100 (contrainte C3).

Un exemple de la contrainte C3 est l'imposition de la possibilité de pouvoir recevoir et/ou transmettre, même en mode veille du dispositif client, des paquets avec une modulation faible (bas débit et longue portée) à l'aide de l'interface sans fil. Un exemple type de paquet que l'interface sans fil peut être amenée à recevoir, lorsque le dispositif client 100 est en mode de veille connectée, est un paquet dit 'de réveil'. Ce type de paquet force un dispositif client à sortir du mode veille et à fonctionner en mode normal.

Un exemple de la contrainte C4 est l'imposition par la règlementation européenne dite 'ErP' (pour 'Energy related Product' en langue anglaise, ou 'Produit lié à l'énergie') d'une limite de consommation moyenne maximale lorsque le dispositif client est en mode veille. Pour un dispositif client d'un réseau sans fil, le seuil maximal S2 est par exemple de 2W en mode de veille connectée. Le dispositif client peut fonctionner avec une puissance en dessous du seuil S2 en gardant l'interface sans fil en fonctionnement, mais seulement si l'interface sans fil est en mode "basse consommation" (incluant donc des périodes de veille intermittente de l'interface sans fil) - sinon, le seuil des 2W est dépassé.

Une contrainte supplémentaire vient d'un souhait d'assurer qualité et portée de la communication sans fil quand l'interface de communication sans fil est dans l'état actif, ce qui requiert une puissance haute à l'émission.

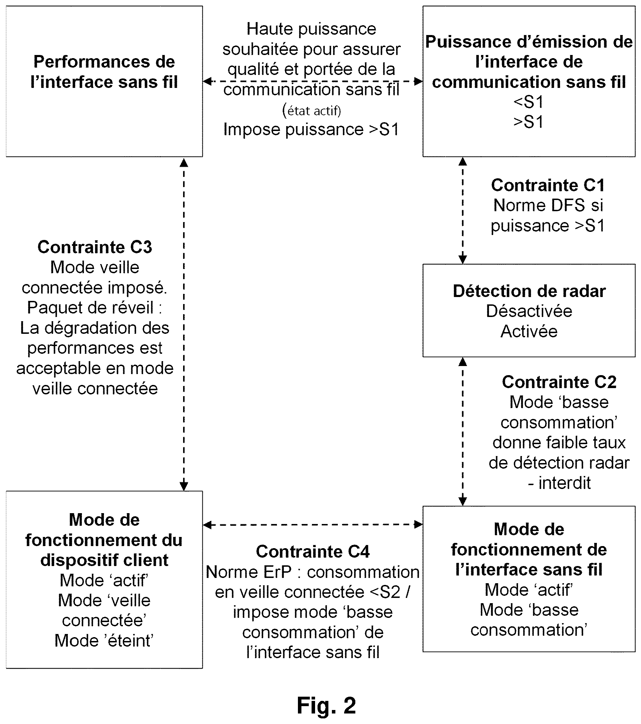

La figure 2 est un diagramme schématique illustrant ces différentes contraintes ainsi que les liens entre contraintes.

Selon un ou plusieurs modes de réalisation, le passage du dispositif client d'un mode de fonctionnement actif hors veille au mode veille est effectué comme suit :
- De façon optionnelle, avant le passage du mode actif au mode veille, le dispositif client enregistre l'état courant sous la forme d'un ou plusieurs paramètres de fonctionnement - en effet, il ne sera alors pas nécessaire de déterminer à nouveau ce ou ces paramètre(s), qui pourront être repris directement. Cela facilite et/ou accélère un passage du mode veille au mode actif. La puissance d'émission à laquelle travaille l'interface sans fil est ainsi mémorisée.
- Le dispositif client vérifie s'il transmet sur un canal pour lequel la détection de radars est obligatoire, par exemple un canal DFS. Si cela n'est pas le cas, les deux prochaines étapes ne sont pas mises en œuvre.
- Dans un premier temps, la puissance d'émission de l'interface de communication sans fil est réduite en dessous du seuil S1 exigeant la détection de radars.
   Cette détection n'est alors plus obligatoire.
- Dans un second temps, la détection radar est désactivée.
- Dans un troisième temps, l'interface de communication sans fil est mise en mode de fonctionnement à consommation réduite.
   Selon un mode de réalisation, ce mode de fonctionnement à consommation réduite est le mode 'basse consommation' avec une veille intermittente pour contribuer à respecter le seuil S2, seuil global pour tout le dispositif client lorsque ce dernier est en mode veille.

Ainsi, la consommation de l'interface de communication sans fil est réduite en deux temps, dans un premier temps en se plaçant à un niveau de puissance S3 inférieur au seuil S1 et permettant de s'affranchir de l'obligation de détection de radar, et un second temps par la mise en œuvre du mode basse consommation de l'interface. En mode basse consommation, la puissance reste au niveau S3 et une réduction de consommation supplémentaire est obtenue par la mise en veille intermittente.

Aucun temps mort n'est ainsi présent dans l'action de détecter des radars tant que cette détection est exigée, et la contrainte C1 afférente est entièrement respectée lors du passage en mode veille.

Ainsi, le dispositif client peut disposer d'une puissance d'émission importante en mode de fonctionnement nominal, même si cela impose la mise en œuvre d'une détection de radar, tout en pouvant passer sans encombre à un mode de basse consommation.

Le dispositif client peut identifier le caractère 'DFS' d'un canal par exemple dans un tableau de correspondance en fonction du numéro du canal. En effet, les numéros des canaux DFS sont prédéterminés.

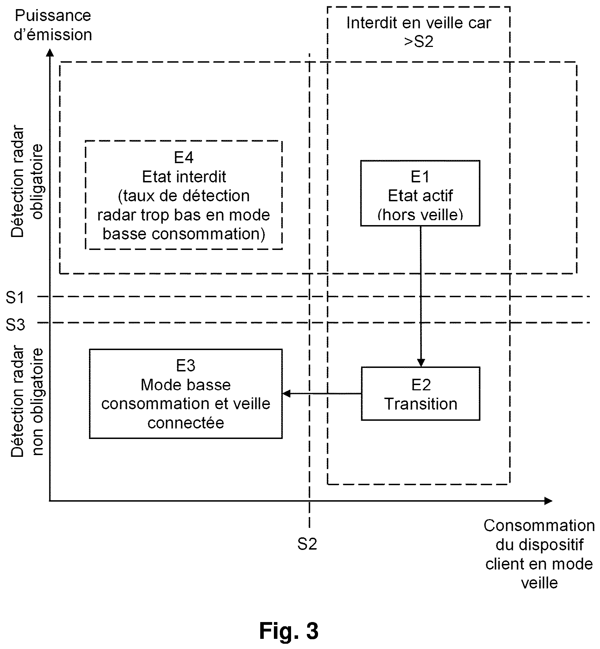

La figure 3 est un diagramme des états de l'interface de communication sans fil selon un mode de réalisation non limitatif. Ce diagramme présente ces états par rapport à la puissance d'émission de l'interface sans fil et de la consommation du dispositif client en mode veille.

Un premier état E1 est l'état actif - la puissance d'émission est située au-dessus du seuil de puissance S1, imposant la détection de radar. La consommation du dispositif client incluant l'interface de communication sans fil est supérieure au seuil de consommation S2. Un second état E2 est un état transitoire entre l'état E1 et l'état E3, où l'interface de communication sans fil est contrôlée pour fonctionner à la puissance d'émission S3 inférieure au seuil de puissance S1, mais sans être en mode basse consommation et veille connectée et ne permettant pas au dispositif client de respecter le seuil de consommation en veille S2.

Un troisième état E3 est un état correspondant au mode de fonctionnement basse consommation- quand l'interface de communication sans fil est dans cet état, le dispositif client peut, une fois effectuée la mise en veille des composants du dispositif autres que l'interface de communication sans fil, respecter le seuil de consommation S2 en mode veille.

Un quatrième état E4 correspond à un fonctionnement de l'interface de communication sans fil avec une puissance à l'émission supérieure au seuil S1 (et par conséquent avec l'obligation de mettre en œuvre une détection de radars) et en mode basse consommation avec veille intermittente. Ces deux aspects étant incompatibles, il s'agit là d'un état interdit.

Dans l'état E3, l'interface de communication sans fil est en mode basse consommation. La puissance à l'émission, restant au seuil S3 dans ce mode, est plus faible et la portée des communications radio baisse en conséquence, par rapport à un fonctionnement à la puissance nominale. Cependant, lors des périodes hors veille du mode basse consommation, certains types de paquets peuvent toujours être reçus et/ou envoyés malgré la baisse de puissance. Il s'agit notamment des paquets avec une modulation faible (bas débit et longue portée). Un paquet de réveil peut alors déclencher un passage en mode actif du dispositif client.

En dehors des paquets de réveil, d'autres types de paquets reçus ou envoyés à la puissance d'émission réduite S3 peuvent, selon l'implémentation ou les contraintes standardisées, comprendre des paquets 'nuls' reçus du point d'accès pour vérifier que le dispositif client est encore présent, des paquets d'accusé réception (notamment des paquets 'nuls' précités) transmis par le dispositif client, ou encore des paquets reçus du point d'accès concernant une mise à jour de clés comme la clé de groupe dite 'GTK'.

Selon une variante optionnelle, le dispositif client est configuré pour envoyer au point d'accès un message indiquant au point d'accès auquel il est associé qu'il procède à un abaissement de sa puissance d'émission, avant que cet abaissement ne devienne effectif. En effet, si le point d'accès constate de lui-même une baisse de la puissance à l'émission du dispositif client, le point d'accès peut être amené à croire que le dispositif client s'est éloigné de lui et initier une procédure d'aiguillage ('steering' en langue anglaise) pour tenter d'amener le dispositif client vers un point d'accès offrant une connexion plus performante. En recevant le message du dispositif client que l'abaissement de la puissance à l'émission est volontaire, le point d'accès auquel le dispositif est associé saura que la procédure d'aiguillage est inutile. De plus, la procédure d'aiguillage voudrait que le dispositif client sorte de son mode veille pour gérer le changement de point d'accès, ce qui n'est pas optimal en termes d'économies d'énergie.

Selon un mode de réalisation, au moment de la sortie du mode veille pour passer dans le mode actif, le dispositif client envoie un message indiquant qu'il revient à sa puissance d'origine.

Selon un mode de réalisation non limitatif, le message est compris dans un paquet de type 'trame d'action' dont le contenu est spécifique au fournisseur du dispositif client, tel que décrite par le standard IEEE 802.11. Un exemple non limitatif du contenu d'un paquet portant l'un ou l'autre des deux messages mentionnés aux deux paragraphes précédents peut être défini comme suit :
- Une donnée indiquant la nouvelle puissance d'émission (en dBm).
   Cette puissance d'émission est - par exemple - encodée comme un entier signé, sur deux octets.
- Une donnée indiquant la raison du changement de puissance.
   Cette donnée est - par exemple - constituée d'une information pouvant avoir une valeur 'passage en mode veille' et une valeur 'passage en mode actif'.
   Un exemple de cette donnée est un octet dont :
      ∘ Le bit 7 ('est_modifiée') indique si la nouvelle puissance est la puissance en fonctionnement en mode actif (bit à zéro) ou une puissance modifiée (bit à 1).
      ∘ Les bits 6 à 0 contiennent un code sur 7 bits indiquant la raison du changement :
         ▪ 0x00 = 'passage en mode actif';
         ▪ 0x01 = 'passage en mode veille';
         ▪ Les autres valeurs sont réservées pour une utilisation future.

Selon le présent exemple de réalisation, le message contient au minimum l'information indiquant la nouvelle puissance d'émission. Les autres données sont optionnelles.

La personne du métier pourra facilement déterminer d'autres formats pour une ou plusieurs de ces données.

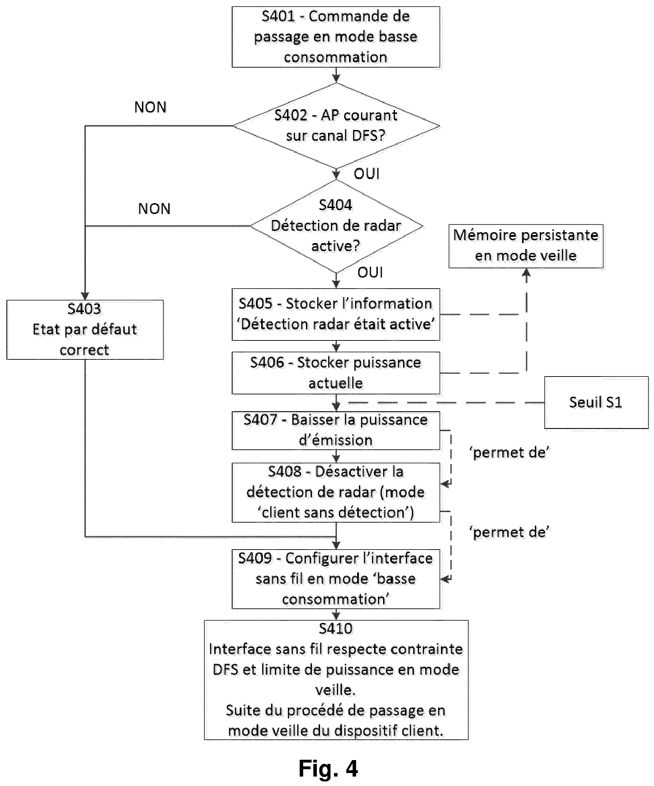

La figure 4 est un algorigramme d'un procédé de mise en mode basse consommation de l'interface sans fil selon un ou plusieurs exemples de réalisation non limitatifs.

Un passage en mode basse consommation de l'interface de communication sans fil est initié (S401). Cette initiation intervient par exemple lorsque le dispositif client décide de se mettre en veille.

Une vérification est alors effectuée pour déterminer si le canal de transmission actuel utilisé par le point d'accès est un canal exigeant une détection de radar (S402).

Si la vérification en S402 est négative, le dispositif client estime (S403) que l'état de l'interface de communication sans fil est correct pour permettre la mise en mode basse consommation (S409). Cette mise en mode basse consommation est suivie, le cas échéant, de la poursuite de la mise en veille du dispositif client (S410).

Selon une variante de réalisation, l'interface sans fil est par défaut en mode basse consommation (avec veille intermittente) dès lors que le canal sur lequel il fonctionne avec le point d'accès n'exige pas de détection radar. Selon cette variante, il n'est pas donc nécessaire, si le test en S402 est négatif, de configurer l'interface sans fil en mode basse consommation, car cette interface est déjà dans ce mode. On peut, selon cette variante, passer directement de S403 à S410 sans passer par S409.

En revenant au mode de réalisation principal, si on se trouve bien sur un canal DFS, le dispositif client détermine (S404) si la détection radar est active ou non. En effet, dans certaines circonstances, on peut se trouver sur un canal DFS mais la détection radar peut être inactive en raison par exemple de spécificités de la règlementation locale n'exigeant pas forcément cette détection. Si la détection de radar est inactive, le dispositif client estimera (S403) que l'état de l'interface de communication sans fil est correct pour permettre sa mise en mode basse consommation (S409). Le test en S404 permet par exemple au dispositif client de fonctionner à la fois dans des pays imposant la contrainte C1 et d'autres où cela n'est pas le cas.

Si la détection de radar est active, le dispositif client stocke (S405) cette information en mémoire, puis stocke également (S406) la puissance d'émission actuelle. La puissance d'émission est ensuite baissée à une valeur en-dessous du seuil imposant la détection de radar (S407). La désactivation de la détection radar devient alors possible - cela est fait en S408. Il est alors possible de passer en mode 'basse consommation' (S409), puis de continuer, le cas échéant, la mise en veille du dispositif client (S410).

Selon le présent mode de réalisation, si la détection de radar n'est pas active, aucune information de l'état de la détection de radar n'est stockée - lors du passage en mode actif, le dispositif client considèrera implicitement que la détection était désactivée. Selon une variante de réalisation, une information explicite de l'état de la détection de radar est également stockée si la détection de radar n'est pas active.

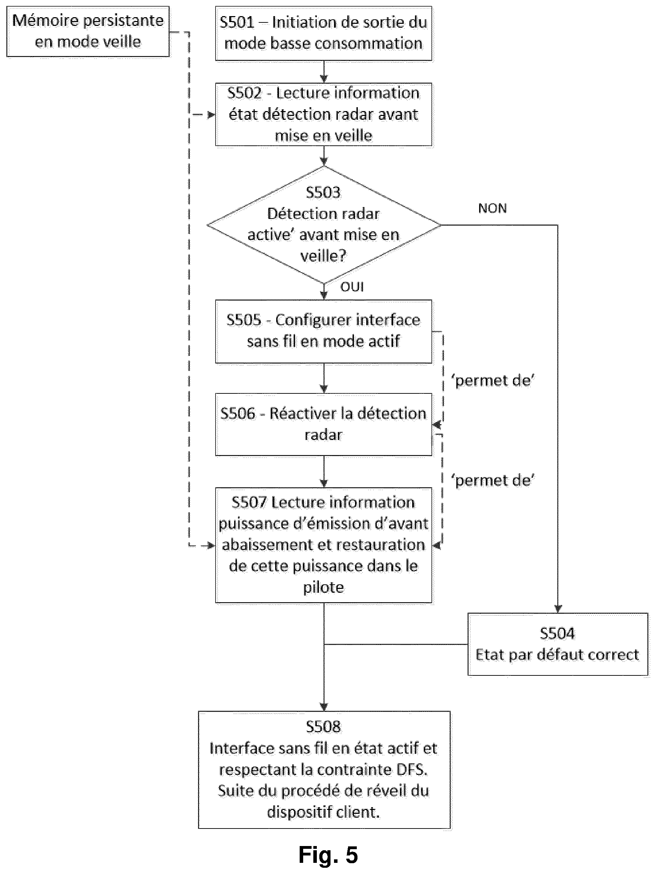

La figure 5 est un algorigramme d'un procédé de mise en mode actif (sortie de mode basse consommation) de l'interface sans fil selon un ou plusieurs exemples de réalisation non limitatifs. Selon le mode de réalisation présenté ici, le procédé de la figure 5 utilise des informations stockées précédemment lors de la mise en mode basse consommation.

En S501, une sortie du mode basse consommation de l'interface de communication sans fil est initiée. Cette initiation intervient par exemple lorsque le dispositif client est sollicité pour sortir du mode veille.

L'état de la détection de radar avant la mise en mode basse consommation est alors obtenu (S502). Il est vérifié si la détection de radar était active avant la mise en mode basse consommation (S503). Si cela n'est pas le cas, le dispositif considère que cette détection n'a pas à être activée et que l'état de l'interface de communication sans fil est correct à ce propos (S504), avant que le cas échéant, les autres composants du dispositif client soient réveillés (S508), si cela n'est pas déjà le cas.

Si la vérification de l'état de la détection de radar en S503 montre que cette détection était active, alors le mode de fonctionnement de l'interface de communication sans fil est changé du mode de basse consommation au mode actif (S505). La détection de radar est ensuite réactivée (S506). La valeur de la puissance à l'émission de l'interface de communication sans fil est obtenue et cette puissance est restaurée (S507), avant le cas échéant la poursuite du passage en mode actif d'autres composants du dispositif client (S508).

### SIGNES DE REFERENCE

100 - Dispositif client
101 - Dispositif point d'accès
102 - Interface de réseau sans fil
103 - Processeur
104 - Mémoire vive
105 - Mémoire morte
106 - Bus de communication
107 - Contrôle de puissance d'émission
108 - Détection de radar
109 - Mode de fonctionnement
110 - Emetteur ondes radar

## Revendications

1. Procédé mis en œuvre par un dispositif (100) de communication sans fil comprenant une interface de communication sans fil (102),
ladite interface étant configurée pour fonctionner sélectivement selon plusieurs modes de fonctionnement comprenant
- un premier mode de fonctionnement (E1) actif;
**caractérisé par**
- un second mode de fonctionnement (E3) à consommation réduite par rapport au premier mode et permettant la réception d'au moins un type de paquet de transmission;
le dispositif étant soumis à une contrainte de mise en œuvre d'une action devant être effectuée en continu lorsque l'interface fonctionne à une puissance d'émission supérieure à un seuil (S1) sur un canal de communication d'un type donné, l'action étant incompatible avec le second mode ;
le procédé comprenant, pour un changement du premier mode vers le second mode,
a) dans un premier temps, l'abaissement (S407) de la puissance d'émission en dessous du seuil ;
b) dans un second temps, la désactivation (S408) de l'action ;
c) dans un troisième temps, l'activation (S409) du second mode.

2. Procédé selon la revendication 1, le second mode comporte de façon alternée des phases de veille et des phases actives, l'interface étant adaptée à pouvoir recevoir au moins un paquet de réveil pendant les phases actives du second mode de fonctionnement.

3. Procédé selon l'une des revendications 1 ou 2, comportant le stockage (S406) du niveau de puissance avant son abaissement.

4. Procédé selon l'une des revendications 1 à 3, dans lequel l'action est une détection de la présence de radars sur le canal de type donné.

5. Procédé selon l'une des revendications 1 à 4, comprenant, avant les étapes (a) à (c), une vérification (S404) que l'action est bien effectuée, les étapes (a) et (b) n'étant effectuées que si cette vérification est positive.

6. Procédé selon la revendication 5, comprenant, en cas de vérification positive, le stockage (S405) d'une information indicative du fait que l'action était bien effectuée.

7. Procédé selon l'une des revendications 1 à 6, dans lequel le canal de type donné est un canal à sélection dynamique de fréquence.

8. Procédé selon l'une des revendications 1 à 7, comprenant, avant l'abaissement de la puissance, la transmission d'un message à un point d'accès auquel le dispositif (100) de communication sans fil est associé, ledit message indiquant le niveau de puissance visé après abaissement.

9. Procédé selon la revendication 8, le message comprenant en outre une donnée indicative de la raison de l'abaissement de la puissance.

10. Procédé mis en œuvre par un dispositif (100) de communication sans fil comprenant une interface de communication sans fil (102),
ladite interface étant configurée pour fonctionner sélectivement selon plusieurs modes de fonctionnement comprenant
- un premier mode de fonctionnement (E1) actif;
**caractérisé par**
- un second mode de fonctionnement (E3) à consommation réduite par rapport au premier mode et permettant la réception d'au moins un type de paquet de transmission;
le dispositif étant soumis à une contrainte de mise en œuvre d'une action devant être effectuée en continu lorsque l'interface fonctionne à une puissance d'émission supérieure à un seuil (S1) sur un canal de communication d'un type donné, l'action étant incompatible avec le second mode ;
le procédé comprenant, pour un changement du second mode vers le premier mode,
(a) dans un premier temps, l'activation du premier mode ;
(b) dans un second temps, l'activation de l'action ;
(c) dans un troisième temps, l'augmentation (S507) de la puissance d'émission au-dessus du seuil.

11. Procédé selon la revendication 10, comprenant, avant l'augmentation de la puissance, la transmission d'un message à un point d'accès auquel le dispositif (100) de communication sans fil est associé, ledit message indiquant le niveau de puissance visé après augmentation.

12. Procédé selon la revendication 11, le message comprenant en outre une donnée indicative de la raison de l'augmentation de la puissance.

13. Dispositif (100) de communication sans fil comprenant une interface de communication sans fil (102), ladite interface étant configurée pour fonctionner sélectivement selon plusieurs modes de fonctionnement comprenant
- un premier mode de fonctionnement (E1) actif;
**caractérisé par**
- un second mode de fonctionnement (E3) à consommation réduite par rapport au premier mode et permettant la réception d'au moins un type de paquet de transmission;
le dispositif étant soumis à une contrainte de mise en œuvre d'une action devant être effectuée en continu lorsque l'interface fonctionne à une puissance d'émission supérieure à un seuil (S1) sur un canal de communication d'un type donné, l'action étant incompatible avec le second mode ;
le dispositif comprenant pour un changement du premier mode vers le second mode :
a) des moyens pour, dans un premier temps, abaisser la puissance d'émission en dessous du seuil ;
b) des moyens pour, dans un second temps, désactiver l'action;
c) des moyens pour, dans un troisième temps, activer le second mode.

14. Dispositif selon la revendication 13, comprenant des moyens pour mettre en œuvre une méthode selon l'une des revendications 2 à 9.

15. Dispositif (100) de communication sans fil comprenant une interface de communication sans fil (102), ladite interface étant configurée pour fonctionner sélectivement selon plusieurs modes de fonctionnement comprenant
- un premier mode de fonctionnement (E1) actif;
**caractérisé par**
- un second mode de fonctionnement (E3) à consommation réduite par rapport au premier mode et permettant la réception d'au moins un type de paquet de transmission;
le dispositif étant soumis à une contrainte de mise en œuvre d'une action devant être effectuée en continu lorsque l'interface fonctionne à une puissance d'émission supérieure à un seuil (S1) sur un canal de communication d'un type donné, l'action étant incompatible avec le second mode ;
le dispositif comprenant pour un changement du second mode vers le premier mode :
(a) des moyens pour, dans un premier temps, activer le premier mode ;
(b) des moyens pour, dans un second temps, activer l'action ;
(c) des moyens pour, dans un troisième temps, augmenter (S507) la puissance d'émission au-dessus du seuil.

16. Dispositif selon la revendication 15, comprenant des moyens pour mettre en œuvre une méthode selon l'une des revendications 11 ou 12.

## Patentansprüche

1. Verfahren, das durch eine Drahtloskommunikationsvorrichtung (100) implementiert wird, umfassend eine Drahtloskommunikationsschnittstelle (102),
wobei die Schnittstelle zum wahlweisen Arbeiten in mehreren Arbeitsmodi konfiguriert ist, umfassend
- einen ersten aktiven Arbeitsmodus (E1);
**gekennzeichnet durch**
- einen zweiten Arbeitsmodus (E3) mit reduziertem Verbrauch im Vergleich zu dem ersten Modus, der den Empfang von mindestens einer Art von Übertragungspaket ermöglicht;
wobei die Vorrichtung einer Einschränkung unterliegt, eine Aktion zu implementieren, die kontinuierlich ausgeführt werden muss, wenn die Schnittstelle mit einer Sendeleistung, die größer als ein Schwellenwert (S1) ist, auf einem Kommunikationskanal einer gegebenen Art arbeitet, wobei die Aktion mit dem zweiten Modus nicht kompatibel ist;
das Verfahren umfassend für einen Wechsel von dem zweiten Modus in den ersten Modus,
a) in einem ersten Schritt, die Senkung (S407) der Sendeleistung unter den Schwellenwert;
b) in einem zweiten Schritt, die Deaktivierung (S408) der Aktion;
c) in einem dritten Schritt, die Aktivierung (S409) des zweiten Modus.

2. Verfahren nach Anspruch 1, wobei der zweite Modus abwechselnde Standby-Phasen und aktive Phasen aufweist, wobei die Schnittstelle angepasst ist, um mindestens ein Weckpaket während der aktiven Phasen des zweiten Arbeitsmodus empfangen zu können.

3. Verfahren nach einem der Ansprüche 1 oder 2, das die Speicherung (S406) des Leistungspegels vor seiner Senkung aufweist.

4. Verfahren nach einem der Ansprüche 1 bis 3, wobei die Aktion eine Erkennung der Anwesenheit von Radargeräten auf dem Kanal einer gegebenen Art ist.

5. Verfahren nach einem der Ansprüche 1 bis 4, umfassend vor den Schritten (a) bis (c) eine Überprüfung (S404), ob die Aktion tatsächlich ausgeführt wird, wobei die Schritte (a) und (b) nur ausgeführt werden, wenn diese Überprüfung positiv ausfällt.

6. Verfahren nach Anspruch 5, umfassend im Falle einer positiven Überprüfung die Speicherung (S405) einer Information, die angibt, dass die Aktion tatsächlich ausgeführt wurde.

7. Verfahren nach einem der Ansprüche 1 bis 6, wobei der Kanal der gegebenen Art ein Kanal mit dynamischer Frequenzauswahl ist.

8. Verfahren nach einem der Ansprüche 1 bis 7, umfassend vor der Leistungssenkung die Übertragung einer Nachricht an einen Zugriffspunkt, mit dem die Drahtloskommunikationsvorrichtung (100) verknüpft ist, wobei die Nachricht den Zielleistungspegel nach der Senkung angibt.

9. Verfahren nach Anspruch 8, die Nachricht ferner umfassend ein Datum, das den Grund für die Leistungssenkung angibt.

10. Verfahren, das durch eine Drahtloskommunikationsvorrichtung (100) implementiert wird, umfassend eine Drahtloskommunikationsschnittstelle (102),
wobei die Schnittstelle zum wahlweisen Arbeiten in mehreren Arbeitsmodi konfiguriert ist, umfassend
- einen ersten aktiven Arbeitsmodus (E1);
**gekennzeichnet durch**
- einen zweiten Arbeitsmodus (E3) mit reduziertem Verbrauch im Vergleich zu dem ersten Modus, der den Empfang von mindestens einer Art von Übertragungspaket ermöglicht;
wobei die Vorrichtung einer Einschränkung unterliegt, eine Aktion zu implementieren, die kontinuierlich ausgeführt werden muss, wenn die Schnittstelle mit einer Sendeleistung, die größer als ein Schwellenwert (S1) ist, auf einem Kommunikationskanal einer gegebenen Art arbeitet, wobei die Aktion mit dem zweiten Modus nicht kompatibel ist;
das Verfahren umfassend für einen Wechsel von dem zweiten Modus in den ersten Modus,
(a) in einem ersten Schritt die Aktivierung des ersten Modus;
(b) in einem zweiten Schritt die Aktivierung der Aktion;
(c) in einem dritten Schritt die Erhöhung (S507) der Sendeleistung über den Schwellenwert.

11. Verfahren nach Anspruch 10, umfassend vor der Leistungserhöhung die Übertragung einer Nachricht an einen Zugriffspunkt, mit dem die Drahtloskommunikationsvorrichtung (100) verknüpft ist, wobei die Nachricht den Zielleistungspegel nach der Erhöhung angibt.

12. Verfahren nach Anspruch 11, die Nachricht ferner umfassend ein Datum, das den Grund für die Leistungserhöhung angibt.

13. Drahtloskommunikationsvorrichtung (100), umfassend eine Drahtloskommunikationsschnittstelle (102), wobei die Schnittstelle zum wahlweisen Arbeiten in mehreren Arbeitsmodi konfiguriert ist, umfassend
- einen ersten aktiven Arbeitsmodus (E1);
**gekennzeichnet durch**
- einen zweiten Arbeitsmodus (E3) mit reduziertem Verbrauch im Vergleich zu dem ersten Modus, der den Empfang von mindestens einer Art von Übertragungspaket ermöglicht;
wobei die Vorrichtung einer Einschränkung unterliegt, eine Aktion zu implementieren, die kontinuierlich ausgeführt werden muss, wenn die Schnittstelle mit einer Sendeleistung, die größer als ein Schwellenwert (S1) ist, auf einem Kommunikationskanal einer gegebenen Art arbeitet, wobei die Aktion mit dem zweiten Modus nicht kompatibel ist;
die Vorrichtung umfassend für einen Wechsel von dem zweiten Modus in den ersten Modus:
a) Mittel zum Senken der Sendeleistung unter einen Schwellenwert in einem ersten Schritt;
b) Mittel zum Deaktivieren der Aktion in einem zweiten Schritt;
c) Mittel zum Aktivieren des zweiten Modus in einem dritten Schritt.

14. Vorrichtung nach Anspruch 13, umfassend Mittel zum Implementieren eines Vorgangs nach einem der Ansprüche 2 bis 9.

15. Drahtloskommunikationsvorrichtung (100), umfassend eine Drahtloskommunikationsschnittstelle (102), wobei die Schnittstelle zum wahlweisen Arbeiten in mehreren Arbeitsmodi konfiguriert ist, umfassend
- einen ersten aktiven Arbeitsmodus (E1);
**gekennzeichnet durch**
- einen zweiten Arbeitsmodus (E3) mit reduziertem Verbrauch im Vergleich zu dem ersten Modus, der den Empfang von mindestens einer Art von Übertragungspaket ermöglicht;
wobei die Vorrichtung einer Einschränkung unterliegt, eine Aktion zu implementieren, die kontinuierlich ausgeführt werden muss, wenn die Schnittstelle mit einer Sendeleistung, die größer als ein Schwellenwert (S1) ist, auf einem Kommunikationskanal einer gegebenen Art arbeitet, wobei die Aktion mit dem zweiten Modus nicht kompatibel ist; die Vorrichtung umfassend für einen Wechsel von dem zweiten Modus in den ersten Modus:
(a) Mittel zum Aktivieren des ersten Modus in einem ersten Schritt;
(b) Mittel zum Aktivieren der Aktion in einem zweiten Schritt;
(c) Mittel zum Erhöhen (S507) der Sendeleistung über den Schwellenwert in einem dritten Schritt.

16. Vorrichtung nach Anspruch 15, umfassend Mittel zum Implementieren eines Vorgangs nach einem der Ansprüche 11 oder 12.

## Claims

1. Method implemented by a wireless communication device (100) comprising a wireless communication interface (102),
said interface being configured to selectively operate according to a plurality of operating modes comprising
- a first active operating mode (E1);
**characterized by**
- a second operating mode (E3) with reduced consumption relative to the first mode and enabling the reception of at least one type of transmission packet;
the device being subjected to a constraint of implementing an action that must be carried out continuously when the interface operates at an emission power greater than a threshold (S1) over a communication channel of a given type, the action being incompatible with the second mode;
the method comprising, for changing from the first mode to the second mode,
a) in a first step, lowering (S407) the emission power below the threshold;
b) in a second step, deactivating (S408) the action;
c) in a third step, activating (S409) the second mode.

2. Method according to claim 1, the second mode alternately comprises standby phases and active phases, the interface being adapted to be able to receive at least one wake-up packet during the active phases of the second operating mode.

3. Method according to either claim 1 or claim 2, comprising storing (S406) the power level before it is lowered.

4. Method according to any of claims 1 to 3, wherein the action is a detection of the presence of radars over the channel of the given type.

5. Method according to any of claims 1 to 4, comprising, before steps (a) to (c), a verification (S404) that the action is indeed carried out, steps (a) and (b) being carried out only if this verification is positive.

6. Method according to claim 5, comprising, in the event of positive verification, storing (S405) information indicative of the fact that the action was indeed carried out.

7. Method according to any of claims 1 to 6, wherein the channel of the given type is a channel with dynamic frequency selection.

8. Method according to any of claims 1 to 7, comprising, before lowering the power, transmitting a message to an access point with which the wireless communication device (100) is associated, said message indicating the targeted power level after lowering.

9. Method according to claim 8, the message further comprising a datum indicative of the reason for lowering the power.

10. Method implemented by a wireless communication device (100) comprising a wireless communication interface (102),
said interface being configured to selectively operate according to a plurality of operating modes comprising
- a first active operating mode (E1);
**characterized by**
- a second operating mode (E3) with reduced consumption relative to the first mode and enabling the reception of at least one type of transmission packet;
the device being subjected to a constraint of implementing an action that must be carried out continuously when the interface operates at an emission power greater than a threshold (S1) over a communication channel of a given type, the action being incompatible with the second mode;
the method comprising, for changing from the second mode to the first mode,
(a) in a first step, activating the first mode;
(b) in a second step, activating the action;
(c) in a third step, increasing (S507) the emission power above the threshold.

11. Method according to claim 10, comprising, before increasing the power, transmitting a message to an access point with which the wireless communication device (100) is associated, said message indicating the targeted power level after increasing.

12. Method according to claim 11, the message further comprising a datum indicative of the reason for increasing the power.

13. Wireless communication device (100) comprising a wireless communication interface (102), said interface being configured to selectively operate according to a plurality of operating modes comprising
- a first active operating mode (E1);
**characterized by**
- a second operating mode (E3) with reduced consumption relative to the first mode and enabling the reception of at least one type of transmission packet;
the device being subjected to a constraint of implementing an action that must be carried out continuously when the interface operates at an emission power greater than a threshold (S1) over a communication channel of a given type, the action being incompatible with the second mode;
the method comprising, for changing from the first mode to the second mode:
a) means for, in a first step, lowering the emission power below the threshold;
b) means for, in a second step, deactivating the action;
c) means for, in a third step, activating the second mode.

14. Device according to claim 13, comprising means for implementing a method according to any of claims 2 to 9.

15. Wireless communication device (100) comprising a wireless communication interface (102), said interface being configured to selectively operate according to a plurality of operating modes comprising
- a first active operating mode (E1);
**characterized by**
- a second operating mode (E3) with reduced consumption relative to the first mode and enabling the reception of at least one type of transmission packet;
the device being subjected to a constraint of implementing an action that must be carried out continuously when the interface operates at an emission power greater than a threshold (S1) over a communication channel of a given type, the action being incompatible with the second mode; the device comprising, for changing from the second mode to the first mode:
(a) means for, in a first step, activating the first mode;
(b) means for, in a second step, activating the action;
(c) means for, in a third step, increasing (S507) the emission power above the threshold.

16. Device according to claim 15, comprising means for implementing a method according to either claim 11 or claim 12.
